# EUROPEAN PATENT SPECIFICATION

(11) **EP 3 032 609 B1**
(45) Date of publication and mention of the grant of the patent: **25.07.2018**
(21) Application number: 14849092.3
(22) Date of filing: 19.08.2014
(51) Int. Cl.: H01M 2/26, H01M 4/04, H01M 10/04, B21D 28/34

(54) **NOTCHING APPARATUS HAVING SCRAP REMOVING PART**
KERBUNGSVORRICHTUNG MIT ÜBERSCHUSSENTFERNUNGSTEIL
APPAREIL DE RÉALISATION D'ENCOCHE COMPORTANT UNE PARTIE D'ÉLIMINATION DES DÉCHETS

(30) Priority: 24.09.2013 KR 20130113183
(43) Date of publication of application: 15.06.2016
(73) Proprietor: LG Chem, Ltd., Seoul 07336 (KR)
(72) Inventor: KIM, Hyejung, Daejeon 34122 (KR); KIM, Minsu, Daejeon 34122 (KR); CHO, Yeonha, Daejeon 34122 (KR); HAN, Changmin, Daejeon 34122 (KR); HA, Kyunghwa, Daejeon 34122 (KR); LEE, Jinhee, Daejeon 34122 (KR)
(74) Representative: Cabinet Plasseraud
(86) International application number: PCT/KR2014/007675
(87) International publication number: WO 2015/046754

(56) References cited:
- JP-A- H1 069 905
- JP-A- H11 354 109
- JP-A- 2000 100 422
- JP-A- 2007 128 841
- KR-A- 20050 038 608
- KR-A- 20050 038 608
- KR-A- 20130 095 368
- KR-A- 20130 095 368
- US-B1- 6 769 600

## Description

### [TECHNICAL FIELD]

The present invention relates to a notching device including a scrap removing means.

### [BACKGROUND ART]

In recent years, a secondary battery, which can be charged and discharged, has been widely used as an energy source for wireless mobile devices or as an auxiliary electric power apparatus. In addition, the secondary battery has attracted considerable attention as a power source for electric vehicles (EV), hybrid electric vehicles (HEV), and plug-in hybrid electric vehicles (Plug-in HEV), which have been developed to solve problems, such as air pollution, caused by existing gasoline and diesel vehicles using fossil fuels.

A secondary battery is manufactured in a state in which an electrode assembly is contained in a battery case together with an electrolyte. Based on a method of manufacturing the electrode assembly, the electrode assembly is classified as a stacked type electrode assembly, a folded type electrode assembly, or a stacked and folded type electrode assembly. In the stacked type electrode assembly or the stacked and folded type electrode assembly, a unit assembly is configured to have a structure in which a positive electrode and a negative electrode are sequentially stacked in a state in which a separator is disposed between the positive electrode and the negative electrode. In order to manufacture the electrode assembly, it is necessary to first prepare a positive electrode and a negative electrode having electrode tabs.

That is, in order to a unit electrode having an electrode tab, it is necessary to perform a notching process for forming electrode tabs at a continuous electrode sheet having an electrode active material applied to one surface or each surface thereof. In the notching process, the electrode sheet is placed on a die, and a portion of the electrode sheet is pressed using a press.

Scraps generated by pressing are discharged through an opening formed in the die so as to have a shape corresponding to the press. In this process, the scraps are generally discharged out of the die through the opening by gravity. However, the scraps may not be discharged out of the die but may remain in the entrance of the opening located at the upper end surface of the die due to friction between the scraps and the inside of the die. In this case, when the electrode sheet is moved by a gripper after the electrode sheet is pressed, the electrode sheet may be caught by the remaining scraps. When the electrode sheet is caught by the remaining scraps, the electrode tabs of the electrode sheet may be bent, or the electrode active material may be peeled from the electrode sheet with the result that dust may be generated.

Therefore, there is a high necessity for a novel notching device that is capable of solving the above problems. KR20130095368 A describes a notching device for forming electrode tabs on a continuous electrode sheet having an electrode active material applied to one surface or each surface thereof in a battery production process.

KR20050038608 A describes a punching apparatus of a flexible flat cable manufacturing machine provided to move a cut scrap to a side by an air gun mounted on the side, thereby preventing the scrap from floating up in a punching unit.

### [DISCLOSURE]

### [TECHNICAL PROBLEM]

The present invention has been made to solve the above problems and other technical problems that have yet to be resolved.

It is an object of the present invention to provide a notching device that is capable of stably forming electrode tabs at an electrode sheet and, at the same time, smoothly discharging scraps.

It is another object of the present invention to provide a secondary battery, exhibiting excellent operational characteristics, which is manufactured using the notching device.

### [TECHNICAL SOLUTION]

The invention is defined in the appended claims. In accordance with the present invention, the above and other objects can be accomplished by the provision of a notching device for forming electrode tabs at a continuous electrode sheet having an electrode active material applied to one surface or each surface thereof in a battery production process, the notching device including a press for pressing the electrode sheet to form the electrode tabs at a portion of the electrode sheet, the press being provided with an air injection hole, through which air is injected from a lower end surface thereof, the press being equipped with at least one scrap removing means, a die having an opening formed in a shape corresponding to the press such that a scrap generated by pressing is discharged through the opening, and a gripper for moving the electrode sheet by a distance corresponding to the press according to operation of the press.

That is, in the notching device according to the present invention, air is injected to the scrap through the air injection hole formed in the lower end surface of the press, whereby the scrap can be effectively discharged out of the die. In addition, at least one scrap removing means is provided. When the scrap is not discharged from the surface of the die even using the driving force of the air, therefore, the scrap removing means further applies physical force to the scrap such that the scrap can be completely discharged out of the die. The scrap removing means is configured to have a structure in which the scrap removing means is driven toward the opening of the die, and then elastically returns to the original position thereof such that the scrap generated by pressing is separated from the lower end surface of the press, and is then discharged through the opening of the die. The scrap removing means includes a compression spring for elastic return to the original position and a repulsive force part contacting the scrap for applying downward force to the scrap the compression spring being coupled to the repulsive force part for applying restoring force to the repulsive force part. One end of the repulsive force part may partially protrude from the lower end surface of the press, and the other end of the repulsive force part may be coupled to the compression spring, which is mounted in the press. The repulsive force part may be formed in the shape of a cylindrical bar or a prism bar.

In this structure, the repulsive force part may merely be in contact with the electrode sheet in a state in which the repulsive force part is compressed by the compression spring before the press contacts the electrode sheet in order to press the electrode sheet. When the press presses the electrode sheet with the result that a scrap is generated, the repulsive force part may discharge the generated scrap through the opening of the die due to restoring force of the compression spring.

The repulsive force part may elastically protrude from the lower end surface of the press by a length of 1 to 5 cm. If the protruding length of the repulsive force part from the lower end surface of the press is less than 1 cm, the scrap generated by pressing cannot be sufficiently pushed through the opening of the die. On the other hand, if the protruding length of the repulsive force part from the lower end surface of the press is greater than 5 cm, it is necessary to further move the press upward by the protruding length of the repulsive force part such that the electrode sheet is not caught by the protruding repulsive force part when the electrode sheet is moved by the gripper after the scrap is discharged. As a result, process time is increased. For this reason, the appropriate length of the repulsive force part that elastically protrudes from the lower end surface of the press may be 1 to 5 cm, more specifically 2 to 3 cm.

The compression spring may have a restoring force of 1 N to 10 N. If the restoring force of the compression spring is less than 1 N, it is not possible to sufficiently push the scrap through the opening of the die. On the other hand, if the restoring force of the compression spring is greater than 10 N, the repulsive force part may deform the electrode sheet before the electrode sheet is pressed by the press. For this reason, the appropriate restoring force of the compression spring may be 1 N to 10 N, more specifically 4 N to 6 N.

The air injection hole may include a plurality of air injection holes formed in the lower end surface of the press over the entirety of the lower end surface of the press. Consequently, driving force may be uniformly applied to the entire surface of scrap. As a result, the scrap may fall vertically through the opening of the die, and may be discharged out of the die without great friction with the inner wall of the die.

In addition, the air injection hole may be formed in a center portion of the repulsive force part.

In accordance with another aspect of the present invention, there is provided an electrode assembly manufactured using the notching device.

In accordance with another aspect of the present invention, there is provided a secondary battery having the electrode assembly contained in a battery case together with an electrolyte in a sealed state.

In accordance with another aspect of the present invention, there is provided a battery pack including the secondary battery as a unit cell.

In accordance with a further aspect of the present invention, there is provided a device including the battery pack as a power source. Specifically, the device may be selected from a group consisting of a mobile phone, a portable computer, a smart phone, a smart pad, a netbook computer, a light electronic vehicle (LEV), an electric vehicle, a hybrid electric vehicle, a plug-in hybrid electric vehicle, and a power storage apparatus.

The structure and manufacturing method of the device are well known in the art to which the present invention pertains and, therefore, a detailed description thereof will be omitted.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is a side view showing a notching device according to the present invention;
FIG. 2 is a plan view showing a press of FIG. 1; and
FIG. 3 is a vertical sectional view showing the press of FIG. 1.

### [BEST MODE]

Now, exemplary embodiments of the present invention will be described in detail with reference to the accompanying drawings. It should be noted, however, that the scope of the present invention is not limited by the illustrated embodiments.

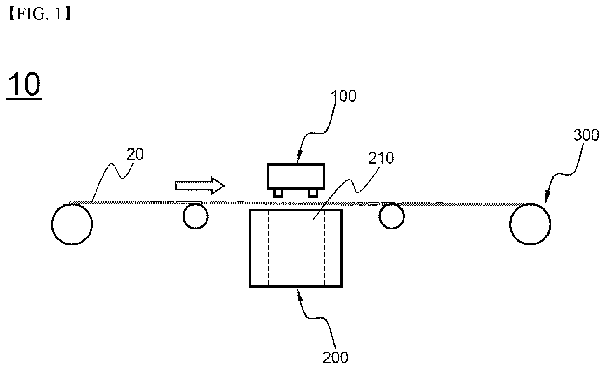

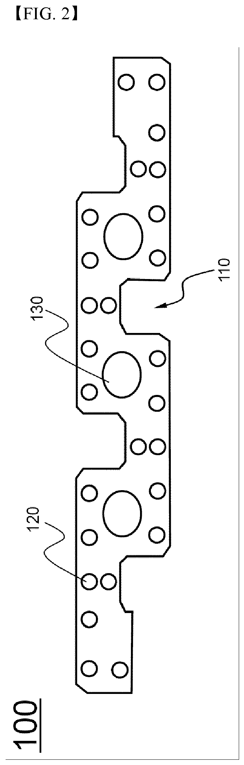

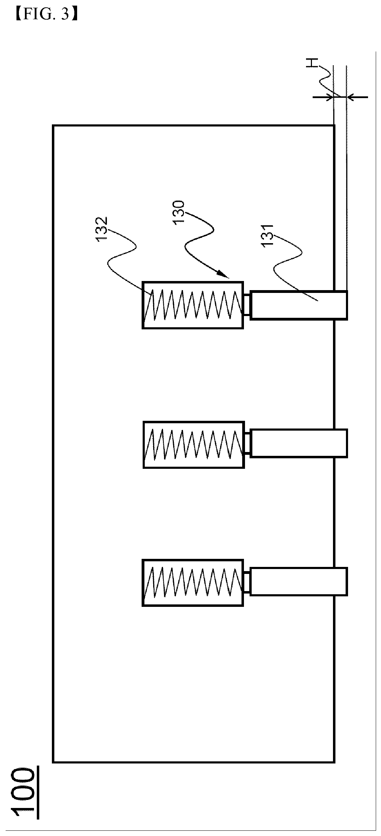

FIG. 1 is a side view typically showing a notching device according to the present invention, FIG. 2 is a plan view typically showing a press of FIG. 1, and FIG. 3 is a vertical sectional view typically showing the press of FIG. 1.

Referring to FIGS. 1 to 3, a notching device 10 includes a press 100, a die 200, and a gripper 300.

The press 100 is configured to have a structure including recesses 110 formed in a shape corresponding to electrode tabs in order to form the electrode tabs at an electrode sheet 20 when viewed in a plan view.

Air injection holes 120 are formed in the surface of the press 100 over the entirety of the surface of the press 100 when viewed in a plan view, and scrap removing means 130 are formed along the middle of the press 100 such that the scrap removing means 130 are spaced apart from each other at the same intervals when viewed in a plan view.

Driving force may be uniformly applied to the entire surface of scraps due to the positions of the air injection holes 120 and the scrap removing means 130 shown in the figures, whereby it is possible to easily discharge the scraps out of the die 200. Each of the scrap removing means 130 of the press 100 includes a repulsive force part 131 and a compression spring 132. The compression spring 132 is mounted in the press 100. The upper end of the repulsive force part 131 is coupled to the compression spring 132. The lower end of the repulsive force part 131 protrudes from the lower end surface of the press 100 by a length H of 2 cm.

The die is provided with an opening 210 formed in a shape corresponding to the press 100.

Although the exemplary embodiments of the present invention have been disclosed for illustrative purposes, those skilled in the art will appreciate that various modifications, additions and substitutions are possible, without departing from the scope of the invention as disclosed in the accompanying claims.

### [INDUSTRIAL APPLICABILITY]

As is apparent from the above description, in the notching device according to the present invention, air is injected to scraps through air injection holes formed in the lower end surface of a press, whereby the scraps can be effectively discharged out of a die. In addition, at least one scrap removing means is provided. When the scraps are not discharged from the surface of the die even using the driving force of the air, therefore, the scrap removing means further applies physical force to the scraps such that the scraps can be completely discharged out of the die.

## Claims

1. A notching device (10) for forming electrode tabs at a continuous electrode sheet (20) having an electrode active material applied to one surface or each surface thereof in a battery production process, the notching device (10) comprising:
a press (100) for pressing the electrode sheet (20) to form the electrode tabs at a portion of the electrode sheet (20), the press (100) being provided with an air injection hole (120), through which air is injected from a lower end surface thereof, the press (100) being equipped with at least one scrap removing means (130);
a die (200) having an opening (210) formed in a shape corresponding to the press (100) such that a scrap generated by pressing is discharged through the opening (210) ; and
a gripper (300) for moving the electrode sheet (20) by a distance corresponding to the press (100) according to operation of the press (100),
**characterized in that**
the scrap removing means (130) is configured to have a structure in which the scrap removing means (130) is driven toward the opening (210) of the die (200), and then elastically returns to an original position thereof such that the scrap generated by pressing is separated from the lower end surface of the press (100), and is then discharged through the opening (210) of the die (200),
the scrap removing means (130) comprising:
- a compression spring (132) for elastic return to the original position thereof, and
- a repulsive force part (131) contacting the scrap for applying downward force to the scrap
the compression spring (132) being coupled to the repulsive force part (131) for applying restoring force to the repulsive force part (131).

2. The notching device (10) according to claim 1, wherein the repulsive force part (131) is formed in the shape of a cylindrical bar or a prism bar.

3. The notching device (10) according to claim 2, wherein the repulsive force part (131) elastically protrudes from the lower end surface of the press (100) by a length of 1 cm to 5 cm.

4. The notching device (10) according to claim 3, wherein the repulsive force part (131) elastically protrudes from the lower end surface of the press (100) by a length of 2 cm to 3 cm.

5. The notching device (10) according to claim 1, wherein the air injection hole (120) comprises a plurality of air injection holes (120) formed in the lower end surface of the press (100) over the entirety of the lower end surface of the press (100).

6. The notching device (10) according to claim 2, wherein the air injection hole (120) is formed in a center portion of the repulsive force part (131).

7. The notching device (10) according to claim 1, wherein the compression spring (132) has a restoring force of 1 N to 10 N.

8. The notching device (10) according to claim 7, wherein the compression spring (132) has a restoring force of 4 N to 6 N.

## Patentansprüche

1. Stanzvorrichtung (10) zum Bilden von Elektrodenzungen in einer kontinuierlichen Elektrodenplatte (20) mit einem elektrodenaktiven Material, welches in einem Batterieherstellungsverfahren auf eine Fläche oder jede Fläche davon aufgebracht wird, wobei die Stanzvorrichtung (10) umfasst:
eine Presse (100) zum Pressen der Elektrodenplatte (20), um die Elektrodenzungen in einem Abschnitt der Elektrodenplatte (20) zu bilden, wobei die Presse (100) mit einem Luftinjektionsloch (120) bereitgestellt ist, durch welches Luft von einer unteren Endfläche davon injiziert wird, wobei die Presse (100) mit wenigstens einem Ausschussentfernungsmittel (130) ausgerüstet ist;
eine Matrize (200) mit einer Öffnung (210), welche derart in einer der Presse (100) entsprechenden Form gebildet ist, dass ein durch Pressen erzeugter Ausschuss durch die Öffnung (210) abgeführt wird; und
einen Greifer (300) zum Bewegen der Elektrodenplatte (20) um eine der Presse (100) entsprechende Distanz gemäß einem Betrieb der Presse (100),
**dadurch gekennzeichnet, dass**
das Ausschussentfernungsmittel (130) dazu eingerichtet ist, eine Struktur aufzuweisen, in welcher das Ausschussentfernungsmittel (130) in Richtung der Öffnung (210) der Matrize (200) getrieben wird und dann derart elastisch zu einer ursprünglichen Position davon zurückkehrt, dass der durch Pressen erzeugte Ausschuss von der unteren Endfläche der Presse (100) getrennt wird und dann durch die Öffnung (210) der Matrize (200) abgeführt wird,
wobei das Ausschussentfernungsmittel (130) umfasst:
- eine Druckfeder (132), um elastisch zu der ursprünglichen Position davon zurückzukehren und
- einen Abstoßkraftteil (131), welcher den Ausschuss berührt, um eine nach unten gerichtete Kraft auf den Ausschuss auszuüben,
wobei die Druckfeder (132) mit dem Abstoßkraftteil (131) gekoppelt ist, um eine Rückstellkraft auf den Abstoßkraftteil (131) auszuüben.

2. Stanzvorrichtung (10) nach Anspruch 1, wobei der Abstoßkraftteil (131) in der Form eines zylindrischen Stabs oder eines Prismenstabs gebildet ist.

3. Stanzvorrichtung (10) nach Anspruch 2, wobei der Abstoßkraftteil (131) um eine Länge von 1 cm bis 5 cm elastisch von der unteren Endfläche der Presse (100) vorsteht.

4. Stanzvorrichtung (10) nach Anspruch 3, wobei der Abstoßkraftteil (131) um eine Länge von 2 cm bis 3 cm elastisch von der unteren Endfläche der Presse (100) vorsteht.

5. Stanzvorrichtung (10) nach Anspruch 1, wobei das Luftinjektionsloch (120) eine Mehrzahl von Luftinjektionslöchern (120) umfasst, welche in der unteren Endfläche der Presse (100) über die Gesamtheit der unteren Endfläche der Presse (100) gebildet sind.

6. Stanzvorrichtung (10) nach Anspruch 2, wobei das Luftinjektionsloch (120) in einem zentralen Abschnitt des Abstoßkraftteils (131) gebildet ist.

7. Stanzvorrichtung (10) nach Anspruch 1, wobei die Druckfeder (132) eine Rückstellkraft von 1 N bis 10 N aufweist.

8. Stanzvorrichtung (10) nach Anspruch 7, wobei die Druckfeder (132) eine Rückstellkraft von 4 N bis 6 N aufweist.

## Revendications

1. Dispositif d'encochage (10) pour former des languettes d'électrode sur une feuille d'électrode continue (20) possédant un matériau actif d'électrode appliqué sur une surface ou chaque surface de celle-ci dans un procédé de production de batterie, le dispositif d'encochage (10) comprenant :
une presse (100) pour presser la feuille d'électrode (20) pour former les languettes d'électrode sur une portion de la feuille d'électrode (20), la presse (100) étant pourvue d'un trou d'injection d'air (120), à travers lequel de l'air est injecté à partir d'une surface d'extrémité inférieure de celle-ci, la presse (100) étant équipée d'au moins un moyen d'élimination de déchet (130) ;
une matrice (200) possédant une ouverture (210) présentant une forme correspondant à la presse (100) de telle sorte qu'un déchet généré par pressage soit évacué à travers l'ouverture (210) ; et
un organe de préhension (300) pour déplacer la feuille d'électrode (20) d'une distance correspondant à la presse (100) selon un fonctionnement de la presse (100),
**caractérisé en ce que**
le moyen d'élimination de déchet (130) est configuré pour présenter une structure dans laquelle le moyen d'élimination de déchet (130) est entraîné vers l'ouverture (210) de la matrice (200), et puis retourne élastiquement vers une position d'origine de celui-ci de telle sorte que le déchet généré par pressage soit séparé de la surface d'extrémité inférieure de la presse (100), et soit alors évacué à travers l'ouverture (210) de la matrice (200),
le moyen d'élimination de déchet (130) comprenant :
- un ressort de compression (132) pour le retour élastique vers la position d'origine de celui-ci, et
- une partie à force de répulsion (131) entrant en contact avec le déchet pour appliquer une force descendante sur le déchet,
le ressort de compression (132) étant accouplé à la partie à force de répulsion (131) pour appliquer une force de rappel sur la partie à force de répulsion (131).

2. Dispositif d'encochage (10) selon la revendication 1, dans lequel la partie à force de répulsion (131) présente la forme d'une barre cylindrique ou d'une barre prismatique.

3. Dispositif d'encochage (10) selon la revendication 2, dans lequel la partie à force de répulsion (131) fait élastiquement saillie, à partir de la surface d'extrémité inférieure de la presse (100), d'une longueur de 1 cm à 5 cm.

4. Dispositif d'encochage (10) selon la revendication 3, dans lequel la partie à force de répulsion (131) fait élastiquement saillie, à partir de la surface d'extrémité inférieure de la presse (100), d'une longueur de 2 cm à 3 cm.

5. Dispositif d'encochage (10) selon la revendication 1, dans lequel le trou d'injection d'air (120) comprend une pluralité de trous d'injection d'air (120) formés dans la surface d'extrémité inférieure de la presse (100) sur la totalité de la surface d'extrémité inférieure de la presse (100).

6. Dispositif d'encochage (10) selon la revendication 2, dans lequel le trou d'injection d'air (120) est formé dans une portion centrale de la partie à force de répulsion (131).

7. Dispositif d'encochage (10) selon la revendication 1, dans lequel le ressort de compression (132) possède une force de rappel de 1 N à 10 N.

8. Dispositif d'encochage (10) selon la revendication 7, dans lequel le ressort de compression (132) possède une force de rappel de 4 N à 6 N.
